# EUROPÄISCHE PATENTSCHRIFT

(11) **EP 0 715 755 B1**
(45) Veröffentlichungstag und Bekanntmachung des Hinweises auf die Patenterteilung: **10.02.1999**
(21) Anmeldenummer: 94924841.3
(22) Anmeldetag: 03.08.1994
(51) Int. Cl.: G10K 11/00

(54) **DRUCKDICHTER WANDLER FÜR KRAFTFAHRZEUGE**
PRESSURE SEALED TRANSDUCER FOR MOTOR VEHICLES
TRANSDUCTEUR ETANCHE A LA PRESSION POUR AUTOMOBILES

(30) Priorität: 28.08.1993 DE 4329055
(43) Veröffentlichungstag der Anmeldung: 12.06.1996
(73) Patentinhaber: ITT Automotive Europe GmbH, 60488 Frankfurt (DE)
(72) Erfinder: PIRRUNG, Jürgen, D-74391 Erligheim (DE); STUMPE, Reinhard, D-73765 Neuhausen (DE); GROHMANN, Gerhard, D-71634 Ludwigsburg (DE)
(86) Internationale Anmeldenummer: EP9402573
(87) Internationale Veröffentlichungsnummer: WO9506937

(56) Entgegenhaltungen:
- DE-A- 3 826 799

## Beschreibung

Die Erfindung betrifft einen Wandler, der sich aus dem Oberbegriff des Anspruchs 1 ergebenden Gattung. Ein derartiger Wandler ist aus der DE-OS 38 26 799 bekannt.

Bei derartigen Wandlern besteht die Forderung, daß keine Feuchtigkeit so weit in das Innere einzudringen vermag, daß die dort eingeklebte Piezokeramikscheibe und die zugehörigen elektronischen Bauteile und elektrischen Verbindungen angegriffen werden können. Außerdem darf die mechanische Dämpfung nicht beeinträchtigt werden. Insbesondere besteht die Forderung, daß ein derartiger Wandler auch dann gegen Feuchtigkeit abgedichtet ist, wenn er durch einen Dampfstrahler beaufschlagt wird.

Die bisher vorgeschlagenen Wandler der sich aus dem Oberbegriff des Anspruchs 1 ergebenden Gattung konnten diese Forderungen nur bedingt befriedigen.

Aufgabe der Erfindung ist es daher, bei einem gattungsgemäßen Wandler das Dichtverhalten gegenüber insbesondere unter erheblichem Druck und Temperatur stehende Feuchtigkeit zu verbessern.

Die Erfindung wird durch die sich aus dem kennzeichnenden Teil des Anspruchs 1 ergebende Merkmalskombination gelöst. Die Erfindung besteht im Prinzip also darin, innerhalb der abzudichtenden Fläche einen Raum zu schaffen, welcher druckmäßig entlastet wird. Naturgemäß ist die Oberfläche der Vorsprünge auch geringer als die Gesamtoberfläche des Stopfens, so daß auch hier eine vergrößerte Flächenpressung vorgesehen werden kann, ohne den Einbau des Stopfens in das Gehäuse zu gefährden. Auch diese erhöhte Flächenpressung im Bereich der Vorsprünge gegenüber der Gehäuseinnenwand trägt zu einer verbesserten Dichtung des Gehäuse innenraums gegenüber dem unter Druck stehenden heißen Dampf bei.

Da gattungsgemäß auch der Membrantopf der äußeren Umgebung und damit der Feuchtigkeitsbelastung zugänglich sein soll, empfiehlt sich in Weiterbildung der Erfindung die Merkmalskombination nach Anspruch 2. Auch hier wird durch die auf die Außenfläche des Membrantopfes auftreffenden Radialbohrungen eine Druckentlastung geschaffen, die für einen Abzug der unter Druck stehenden Feuchtigkeit über die Radialbohrung und die Durchbrüche nach außen sorgt und so die nachfolgende Oberfläche des Membrantopfes von Feuchtigkeit freihält.

Vorzugsweise münden gemäß Anspruch 3 Radialbohrung und Durchbruch in die gleiche Kammer, so daß die Entlüftung vom äußeren über die beiden Öffnungen bis hin zur Fläche des Membrantopfes erfolgen kann.

Eine weitere Verbesserung des Dichtverhaltens und gleichzeitig eine mechanische Sicherung gegen Verschiebung des Membrantopfes in Längsrichtung des Stopfens wird durch die sich aus Anspruch 4 ergebenden Maßnahmen erreicht.

In Weiterbildung der Erfindung läßt sich die Dichtwirkung noch durch ein Mehrkammersystem entsprechend der Merkmalskombination nach Anspruch 5 erhöhen. Hierdurch wird auch der Einbau des Stopfens vereinfacht, da mehrere über den Umfang reichende Kammern längs des Stopfens gebildet werden, deren Wände zwar eine erhöhte Flächenpressung auf die Gehäuseinnenwand ausüben, gleichzeitig aber auch ein vergleichsweise einfachen Einbau in den Gehäuseinnenraum ermöglichen.

Um nun sowohl die äußere Oberfläche des Stopfens als auch die innere Oberfläche des Membrantopfes möglichst weitgehend frei von dem Einfluß der Feuchtigkeit zu halten, empfiehlt sich in Weiterbildung der Erfindung die Merkmalskombination nach Anspruch 6.

In Verbindung mit der Merkmalskombination nach Anspruch 4 empfiehlt sich auch die Anwendung der Merkmalskombination nach Anspruch 7, wobei ähnlich einer Rastwirkung die umlaufenden Ansätze in die Nuten des Membrantopfes einrasten.

Die Belüftunswirkung, die gleichzeitig zum Entfernen der eingedrungenen Flüssigkeit und zum Abbau eines sich in der Kammer aufbauenden Drucks dient, läßt sich durch die Anwendung der Merkmale nach Anspruch 8 noch erhöhen, indem die Zutrittsflächen zwischen Umgebung und Kammer bzw. Außenfläche des Membrantopfes erhöht werden, wobei durch die versetzte Anordnung von Durchbrüchen und Radialbohrungen ein direktes Eindringen von Feuchtigkeit weitgehend verhindert wird. Selbstverständlich ist es dabei vorteilhaft, wenn zumindest eine der Bohrungen im Einbauzustand senkrecht nach unten weist, um das Abfließen von Feuchtigkeit zu erleichtern.

Der aus einem elastischen Material wie beispielsweise Silikon gebildete Stopfen kann gleichzeitig noch zur elastischen Aufnahme einer Leiterplatte gemäß der Merkmalskombination nach Anspruch 9 dienen, wobei durch den Stopfen und die oben angegebenen Merkmale die Gehäusekammer frei von Feuchtigkeit und anderen Umwelteinflüssen gehalten wird.

Ein Ausführungsbeispiel der Erfindung wird nachfolgend anhand der Zeichnung erläutert.

Darin zeigt:

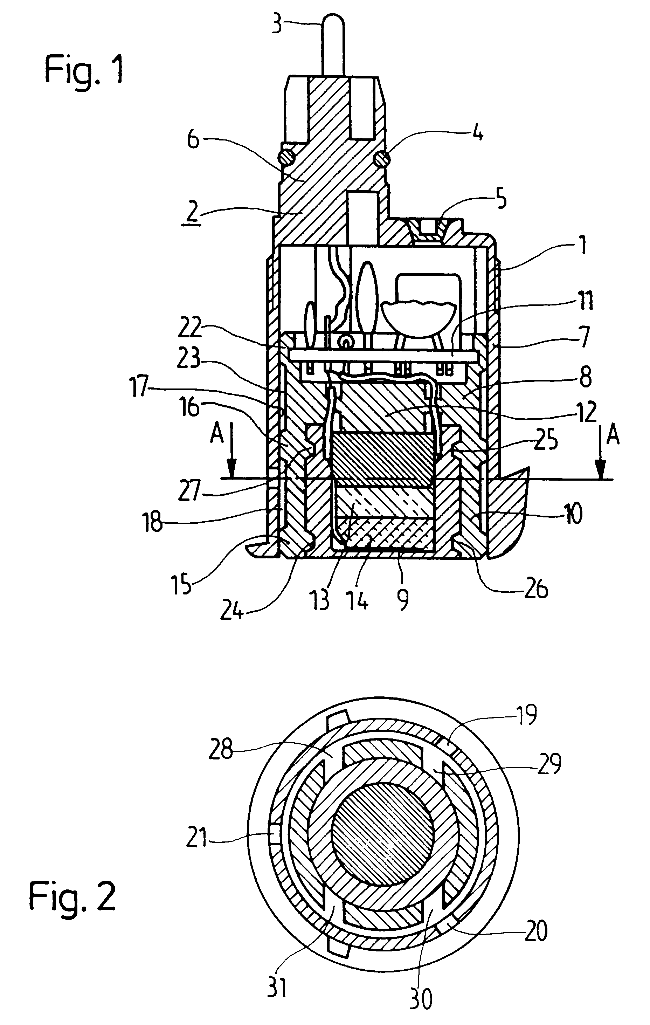

- Fig. 1: einen Längsschnitt durch einen erfindungsgemäßen Wandler und
- Fig. 2: einen in der Höhe A-A durchgeführten Querschnitt durch den Wandler nach Fig. 1.

Der über eine Rastung 1 fixierte Wandler besitzt als nach außen gerichteten Anschluß einen Kontaktstecker 3. Der Wandler kann beispielsweise ein Piezowandler sei, der als Sender und Empfänger für eine Parkhilfe in einem Kraftfahrzeug dient. Der Kontaktstecker 3 ist über einen Dichtring 4 nach außen abgedichtet. Ein Verschluß 5 in dem Gehäuse 2 erlaubt im Bedarfsfall den Zugriff in das Innere des Gehäuses, beispielsweise um Bauelemente einzustellen oder einen Schwingkreis, insbesondere eine Trimmspule, abzugleichen.

Das Gehäuse 2 besitzt einen Steckeransatz 6 und einen nach außen offenen Gehäusetopf 7 zur Aufnahme der zu dem Wandler gehörenden Bauelemente. Um den Gehäusetopf nach außen abzudichten, ist im wesentlichen ein aus einem elastischen Material, insbesondere Silikon, gebildeter Stopfen 8 vorgesehen, welcher in den Gehäusetopf eingedrückt ist und sich an den inneren Wänden des Gehäusetopfes 7 über Radialkräfte abstützt. Der Stopfen 8 nimmt sowohl einen eine Piezoscheibe 9 tragenden Membrantopf 10 als auch eine Leiterplatte 11 mit elektronischen Bauelementen auf. Diese Bauelemente dienen beispielsweise als Schwingkreis zur elektrischen Dämpfung. Der Membrantopf kann insbesondere aus Aluminium geformt sein und einen dünnen Boden haben, hinter dem nach außen abgeschirmt die Piezoscheibe 9 liegt. Die Piezoscheibe ist gegenüber dem Stopfen durch einen Dichteinsatz 12, beispielsweise aus Silikon und einer, gegebenenfalls auch zwei, Schaumstoffscheiben 13, 14 getrennt. Über elektrische Anschlußleitungen ist die Piezoscheibe 9 mit der elektronischen Schaltung auf der Leiterplatte 11 verbunden.

Es muß nun sicher verhindert werden, daß unter hohem Druck stehende Feuchtigkeit, beispielsweise wenn ein Dampf strahl auf den Membrantopf 10 gerichtet wird, über die Grenzflächen zwischen Membrantopf 10, Stopfen 8 und Gehäusetopf 7 weit in das Innere des Gehäuses gelangen kann und so zu einer Beschädigung der elektrischen Kreise auf der Leiterplatte 11 bzw. der Piezoscheibe 9 oder Beeinträchtigung der mechanischen Dämpfung zwischen Piezoscheibe 9 und Dichteinsatz 12 führen kann.

Hierzu dienen im wesentlichen ein erster umlaufender Ringwulst 15 und ein zweiter umlaufender Ringwulst 16, die in Verbindung mit der Innnenwand 17 des Gehäusetopfes 7 eine erste umlaufende Kammer 18 bilden. Die Wulste sind somit im ausgebauten Zustand des Stopfens 8 so hoch, daß mit Sicherheit eine ringförmige umlaufende erste Kammer 18 gebildet wird, wenn der Stopfen 8 in dem Gehäusetopf 7 eingebaut ist. Dabei ist die Kammer 18 zur Verdeutlichung mit einer vergleichsweise recht großen Tiefe dargestellt. Zur Durchführung der Erfindung genügt es aber, wenn sich nur ein umlaufender Raum ergibt, welcher über einem oder mehreren Durchbrüchen 19, 20, 21 in Verbindung mit der Umgebung des Wandlers 2 steht und damit belüftet werden kann. Auf diese Weise kann die aufgrund von Strahldruck oder durch Kapillarkräfte in der Grenzfläche zwischen Gehäusetopf 7 und Stopfen 8 befindliche Flüssigkeit über die Durchbrüche 19 bis 21 ins Freie abgeleitet werden. Gleichzeitig schaffen die als Wulste ausgebildeten Vorsprünge 15, 16 örtlich eine sehr große Flächenpressung zwischen Stopfen 8 und Innenwand 17 des Gehäusetopfes 7, wodurch die Dichtwirkung des Stopfens noch erhöht wird. Eine Montagevereinfachung sowie zum Teil eine weitere Verbesserung der Dichtung läßt sich bei dem Wandler 2 noch durch die Verwendung eines dritten Vorsprungs 22 erreichen, wodurch noch eine zweite umlaufende Kammer 23 gebildet wird, die in ihrer Form der ersten Kammer 18 im wesentlichen entsprechen kann.

In Höhe des zweiten Wulstes 22 nimmt der Stopfen gleichzeitig die Leiterplatte 11 auf, die hierdurch fest in dem Stopfen 8 eingespannt ist und sich so auch bei heftigen Schüttelbewegungen des Wandlers 2 nicht von dem Stopfen lösen kann. Der Gehäusetopf benötigt daher nicht zusätzliche Vorsprünge oder Einsenkungen, um eine Längsbewegung des Stopfens 8 gegenüber dem Gehäuse 7 zu verhindern. Auf diese Weise läßt sich das Gehäuse 7 als einfaches Spritzgußteil herstellen.

Um auch die Dichtwirkung des Stopfens 8 gegenüber dem Membrantopf 10 an der entsprechenden Grenzfläche zu erhöhen und um eine Bewegung des Membrantopfes 10 gegenüber dem Stopfen 8 in Längsrichtung des Membrans auszuschließen, ist der Membrantopf mit zwei umlaufenden Nuten 24, 25 versehen, in die entsprechende Ansätze 26, 27 des Stopfens 8 hinterschneidend ragen. Diese Ansätze können durch das elastische Material beim Einbau des Membrantopfes in den Stopfen 8 gebildet werden, können aber auch schon im ausgebauten Zustand des Stopfens vorgesehen sein, um eine vergrößerte Kraftwirkung der Ansätze auf den Boden der Nuten zu erhalten. Die Ansätze sind in der Regel kreisförmig umlaufend, müssen dies aber nicht, sondern können auch durch einzelne ringförmig hintereinander liegende Vorsprünge oder Noppen ausgeführt sein. Um auch eine entsprechende Belüftung der Außenfläche des Membrantopfes zu erreichen, gehen von der ersten Kammer 18 Radialbohrungen 28, 29, 30 31 durch die Seitenwand des Stopfens 8 und schaffen somit über die erste Kammer 18 und die entsprechenden Durchbrüche 19 bis 21 eine Verbindung in die Umgebung des Wandlers 2.

Der Zusammenbau des Wandlers geschieht dadurch, daß der Stopfen auf der einen Seite mit dem Membrantopf 10 und von der anderen Seite her mit der Leiterplatte 11 bestückt wird, wobei diese beiden Baugruppen in entsprechende Ausnehmungen in den Stopfen eingefügt werden. Die elektrische Schaltung auf der Leiterplatte wird mit dem Kontaktstecker 3 des Gehäuses 2 verbunden und anschließend der Stopfen 8 in den Gehäusetopf 7 eingefügt.

## Patentansprüche

1. Wandler (2), insbesondere für den Einbau in Kraftfahrzeuge, bei dem ein einen Schwinger (9), vorzugsweise Piezoschwinger, tragender Membrantopf (10) in die Öffnung eines Stopfens (8) aus elastischem Material derart eingesetzt ist, daß der Boden des Membrantopfes (10) nach außen frei zugänglich ist und wobei der Stopfen (8) in das offene Ende eines Gehäusetopfes (7) derart eingesetzt ist, daß das den Membrantopf tragende Ende des Stopfens (8) frei zugänglich ist, wobei der Außenumfang des Stopfens (8) mindestens 2 beabstandet zueinander umlaufende Vorsprünge (15, 16) aufweist, die in Verbindung mit der inneren Gehäusewand (17) eine umlaufende erste Kammer (18) bilden dadurch **gekennzeichnet,** daß in dem Gehäuse mindestens ein radialer Durchbruch (19, 20, 21) zur Entlüftung der ersten Kammer (18) vorgesehen ist.

2. Wandler nach Anspruch 1, dadurch **gekennzeichnet,** daß die hohlzylindrische Wand des Stopfens (8) mit mindestens einer Radialbohrung (28, 29, 30, 31) versehen ist, die im Abstand zwischen den zwei umlaufenden Vorsprüngen (15, 16) angeordnet ist.

3. Wandler nach einem der vorangegangenen Ansprüche, dadurch **gekennzeichnet**, daß die Radialbohrungen (28 bis 31) in die gleiche erste Kammer (18) mündet, wie der Durchbruch (19 bis 21).

4. Wandler nach einem der vorangegangenen Ansprüche, dadurch **gekennzeichnet,** daß der Membrantopf (10) mindestens 2 zueinander beabstandet umlaufende Nuten (24, 25) besitzt, die im zusammengebauten Zustand des Wandlers (2) zu beiden Seiten der Radialbohrung (28 bis 31) liegen.

5. Wandler nach einem der vorangegangenen Ansprüche, dadurch **gekennzeichnet**, daß der Stopfen mit drei Vorsprüngen (15, 16, 22) versehen ist, durch welche die erste und eine zweite Kammer (18, 23) gebildet werden.

6. Wandler nach Anspruch 5, dadurch **gekennzeichnet,** daß die Radialbohrungen (28 bis 31) und die Durchbrüche (19 bis 21) in die erste Kammer (18) der zwei Kammern (18, 23) münden, welche im Bereich des offenen Endes des Gehäusetopfes (7) angeordnet ist.

7. Wandler nach einem der vorangegangenen Ansprüche, dadurch **gekennzeichnet,** daß die Seitenwand der Stopfenöffnung mit zwei umlaufenden Ansätzen (26, 27) versehen ist, die den Nuten (24, 25) zugeordnet sind.

8. Wandler nach einem der vorangegangenen Ansprüche, dadurch **gekennzeichnet**, daß die Radialbohrungen (28 bis 31) und die in die erste Kammer (18) mündenden Durchbrüche gegeneinander versetzt angeordnet sind.

9. Wandler nach einem der vorangegangenen Ansprüche, dadurch **gekennzeichnet,** daß das dem Membrantopf (10) abgewandte Ende des Stopfens (8) einen elektrischen Schaltkreis (11) trägt, dessen Bauelemente in eine durch den Stopfen (8) und den Gehäuseboden begrenzte Gehäusekammer ragen.

## Claims

1. Transducer (2), in particular for being mounted into automotive vehicles, wherein a diaphragm retainer (10) which carries an oscillator (9), preferably a piezoelectric oscillator, is mounted into the opening of a plug (8) made of an elastic material such that the bottom of the diaphragm retainer (10) provides ease of access to the outside, and the plug (8) is mounted into the open end of a housing bowl (7) such that the end of the plug (8) carrying the diaphragm retainer is freely accessible, wherein the outside circumference of the plug (8) has at least two spaced circumferential projections (15, 16) which form a first circumferential chamber (18) along with the inner housing wall (17),
**characterized** in that at least one radial aperture (19, 20, 21) for the evacuation of the first chamber (18) is provided in the housing.

2. Transducer as claimed in claim 1,
**characteri zed** in that the hollow-cylindrical wall of the plug (8) includes at least one radial bore (28, 29, 30, 31) which is arranged at a distance from the two circumferential projections (15, 16).

3. Transducer as claimed in any one of the preceding claims,
**characterized** in that the radial bores (28 to 31) and the apertures (19 to 21) terminate into the same first chamber (18).

4. Transducer as claimed in any one of the preceding claims,
**characterized** in that the diaphragm retainer (10) includes at least two spaced circumferential grooves (24, 25) which are arranged on either side of the radial bores (28 to 31) in the mounted condition of the transducer (2).

5. Transducer as claimed in any one of the preceding claims,
**characterized** in that the plug has three projections (15, 16, 22) forming the first and a second chamber (18, 23).

6. Transducer as claimed in claim 5,
**characterized** in that the radial bores (28 to 31) and the apertures (19 to 21) terminate into the first chamber (18) of the two chambers (18, 23) which is arranged in proximity to the open end of the housing bowl (7).

7. Transducer as claimed in any one of the preceding claims,
**characterized** in that the side wall of the plug opening has two circumferential attachments (26, 27) which are associated with the grooves (24, 25).

8. Transducer as claimed in any one of the preceding claims,
**characterized** in that the radial bores (28 to 31) and the apertures terminating into the first chamber (18) are offset in relation to each other.

9. Transducer as claimed in any one of the preceding claims,
**characterized** in that the end of the plug (8) remote from the diaphragm retainer (10) carries an electric circuit (11) having its components project into a housing chamber that is defined by the plug (8) and the housing bottom.

## Revendications

1. Transducteur (2), notamment destiné à être monté dans un véhicule automobile, dans lequel une cuvette à membrane (10) portant un oscillateur (9), de préférence un oscillateur piézoélectrique, est placée dans l'ouverture d'un bouchon (8) en matière élastique de façon telle que le fond de la cuvette à membrane (10) soit librement accessible de l'extérieur et le bouchon (8) est placé dans l'extrémité ouverte d'une cuvette de boîtier (7) de façon telle que l'extrémité du bouchon (8) portant la cuvette à membrane soit librement accessible, le contour périphérique extérieur du bouchon (8) comportant au moins deux parties en saillie (15, 16) qui en font tout le tour et sont espacées l'une de l'autre et qui, en liaison avec la paroi intérieure de boîtier (17), forment une première chambre (18) qui fait tout le tour, caractérisé en ce qu'au moins un passage radial (19, 20, 21) est prévu dans le boîtier pour la purge de la première chambre (18).

2. Transducteur suivant la revendication 1, caractérisé en ce que la paroi cylindrique creuse du bouchon (8) est pourvue d'au moins un trou radial (28, 29, 30, 31) qui est disposé de manière espacée entre les deux parties en saillie (15, 16) qui font tout le tour.

3. Transducteur suivant l'une des revendications précédentes, caractérisé en ce que les trous radiaux (28 à 31) débouchent dans la même première chambre (18) que le passage (19 à 21).

4. Transducteur suivant l'une des revendications précédentes, caractérisé en ce que la cuvette à membrane (10) comporte au moins deux gorges (24, 25) qui en font tout le tour et sont espacées l'une de l'autre et qui, à l'état assemblé du transducteur (2), sont situées des deux côtés du trou radial (28 à 31).

5. Transducteur suivant l'une des revendications précédentes, caractérisé en ce que le bouchon est pourvu de trois parties en saillie (15, 16, 22) au moyen desquelles la première chambre (18) et une seconde chambre (23) sont formées.

6. Transducteur suivant la revendication 5, caractérisé en ce que les trous radiaux (28 à 31) et les passages (19 à 21) débouchent dans la première (18) des deux chambres (18, 23) qui est disposée dans la zone de l'extrémité ouverte de la cuvette de boîtier (7).

7. Transducteur suivant l'une des revendications précédentes, caractérisé en ce que la paroi latérale de l'ouverture de bouchon est pourvue de deux parties en saillie (26, 27) qui en font tout le tour et sont associées aux gorges (24, 25).

8. Transducteur suivant l'une des revendications précédentes, caractérisé en ce que les trous radiaux (28 à 31) est les passages débouchant dans la première chambre (18) sont disposés d'une manière décalée les uns par rapport aux autres.

9. Transducteur suivant l'une des revendications précédentes, caractérisé en ce que l'extrémité du bouchon (8) située à l'opposé de la cuvette à membrane (10) porte un circuit électrique (11) dont les composants font saillie dans une chambre. de boîtier délimitée par le bouchon (8) et le fond de boîtier.
